Europäisches Patentamt

European Patent Office

Office européen des brevets

(11) Publication number: **0 040 773**
**B1**

# EUROPEAN PATENT SPECIFICATION

(45) Date of publication of patent specification: 06.02.85

(51) Int. Cl.⁴: **B 25 D 17/24,** F 16 F 9/48

(21) Application number: 81103747.2

(22) Date of filing: 15.05.81

(54) A recoil damper for a reciprocating member.

(30) Priority: 27.05.80 PCT/US80/00641

(43) Date of publication of application:
02.12.81 Bulletin 81/48

(45) Publication of the grant of the patent:
06.02.85 Bulletin 85/06

(84) Designated Contracting States:
BE DE FR GB

(56) References cited:
FR-A-1 068 251
FR-A-1 364 607
FR-A-2 300 940
FR-A-2 433 134
US-A-3 868 145
US-A-4 030 566

(73) Proprietor: CATERPILLAR TRACTOR CO.
100 Northeast Adams Street
Peoria Illinois 61629 (US)

(72) Inventor: Roussin, Michael Anthony
3120 W. Forsythe
Peoria, Illinois 61614 (US)
Inventor: Cobb, Delwin Earl
6401 N. Brookwood Lane
Peoria, Illinois 61614 (US)

(74) Representative: Wagner, Karl H.
WAGNER & GEYER Patentanwälte
Gewuerzmuehlstrasse 5 Postfach 246
D-8000 München 22 (DE)

Courier Press, Leamington Spa, England.

## Description

Technical Field

This invention relates to rock-breaking machinery. In particular it relates to a recoil damper for the reciprocating member of such machinery.

Background Art

In reciprocating machinery, and particularly rock breakers, there is a requirement to dampen the motion of the reciprocating mechanism on the recoil stroke. In some rock breakers an eccentric mechanism provides intermittent power strokes to the rock breaker tip or shank through an intermediate impact link located between the eccentric and the shank. In the earlier impact devices the shank was usually impacted directly by the eccentric ring. A seal was generally provided between the shank and the housing. The seal generally experienced a short life due to the large number of cycles and large displacement (8½ to 9 cm) during each cycle. Recoil of the shank was absorbed by conventional dampening devices located exterior of the drive mechanism. An example of such an exterior recoil damper is found in U.S. Patent 3,868,145.

With the advent of a limited displacement (1½ cm) type intermediate impact link positioned between the eccentric and the shank, the intermediate impact link itself must be dampened as it is relatively free floating in comparison to the more conventional shank and eccentric. That is, the intermediate impact link, being located between the enclosed eccentric and the exterior shank, transmits the force of the eccentric to the shank. In order to provide relatively free movement toward the shank, the intermediate impact link is mounted in appropriate bearings positioned in the housing. However, upon recoil, the recoil force would ordinarily be transmitted to the eccentric thus causing excessive wear on the eccentric unless some form of recoil damper is used.

In such intermediate impact link type rock breakers, the force to be applied to the shank ordinarily does not occur until the shank is displaced rearwardly to engage the intermediate impact link which is also displaced rearwardly into position to be contacted by the eccentric. As the eccentric rotates so that its periphery contacts the intermediate impact link, the force of the eccentric is transmitted through the intermediate impact link to the shank which in turn acts on the working surface. As the eccentric continues to rotate, the force is relieved from the intermediate impact link, thus permitting the shank to recoil with such recoil transmitted to the intermediate impact link. Although the motion of the shank could be dampened in the manner shown in U.S. Patent No. 3,868,145, that is an exterior damper may be mounted adjacent the shank, the recoil motion of the intermediate impact link which is contained substantially within the housing must also be dampened.

According to FR—A—2 300 940 the movement of a reciprocating member is damped by a damping means in both directions. One fluid chamber is arranged at either side of a piston of the reciprocating means, whereby the piston itself is closing the respective chamber in communication with the damping means. This device would not be usable in connection with rock breakers or the like, where a relative free movement of the reciprocating member in the direction against the tool is necessary.

FR—A—1 364 607 shows a similar arrangement but in which the damping is different in the two directions. Again, the damper shown in this document is only suitable for use as an external damper however.

The present invention is directed to overcoming one or more of the problems as set forth above.

Disclosure of the Invention

One aspect of the present invention is defined in claim 1.

Another aspect of the invention is defined in claim 8.

Preferred modifications of the recoil damper are given in the subclaims.

According to both aspects the present invention dampens the motion of a reciprocating member in one direction while permitting relatively free movement of the reciprocating member in the other opposite direction. This recoil dampening is particularly appropriate in those devices such as rock breakers that require a force to be imparted to a tool, which may result in the recoil force of the tool being imparted back to the machine.

Brief Description of the Drawings

Figure 1 is a schematic view, partly in section, of an embodiment of a recoil damper as used with an intermediate link of a rock breaker,

Figure 2 is a detailed sectional view of the embodiment of the recoil damper shown in Figure 1.

Figure 3 is a schematic view of an alternate embodiment of the recoil damper.

Best Mode of Carrying Out the Invention

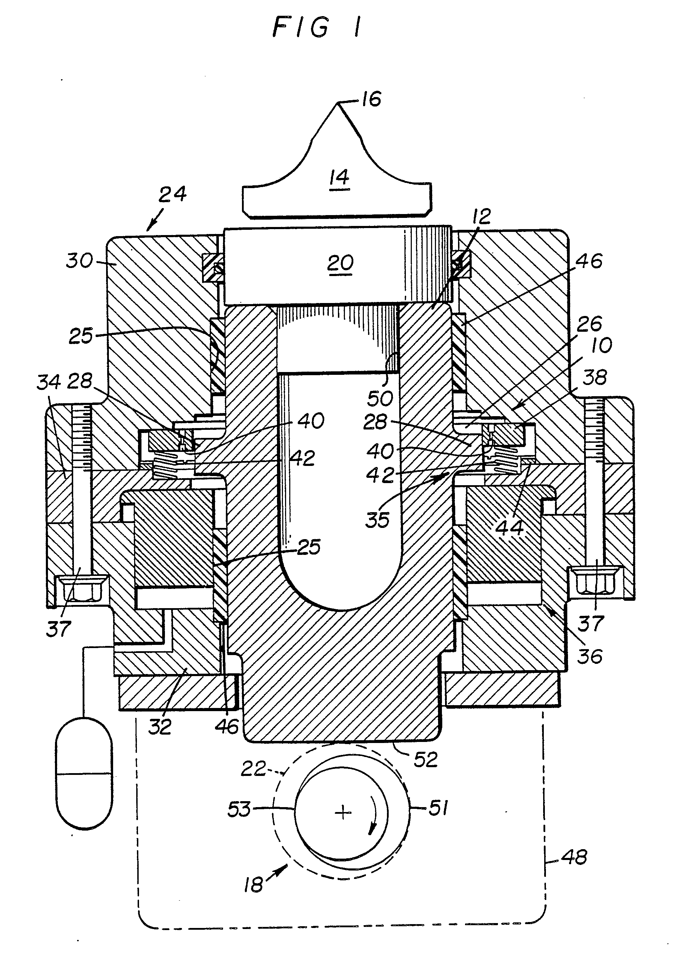

Referring to Figure 1, a recoil damper 10 is shown with an intermediate impact link 12 of an impact type rock breaker.

The impact type rock breaker consists of a shank 14 having as a portion thereof a rock breaker tip 16 used to impact and thus break rock. An eccentric mechanism 18 provides intermittent power strokes to intermediate impact link 12 which in turn are transmitted to shank 14. It should be noted that Figure 1 illustrates the rock breaker in the "at rest" condition. As the rock breaker tip 16 is brought into contact with the material to be broken, the shank 14, which is pivoted from a mounting (not shown), is in turn brought into contact with a portion 20 of intermediate impact link 12. Further imposition of force by rock breaker tip 16 against a surface to be broken results in intermediate impact link 12 moving downwardly as shown in Figure 1 or in a first direction thus bringing the intermediate impact link 12 into the range of eccentric 18. This range is denoted by the dashed circle 22 in Figure 1. As eccentric 18 rotates, it will contact intermediate impact link 12 to urge it in a second opposite direction.

Housing 24 defines a bore 25 in which intermediate impact link 12 is slidably positioned. Also defined in housing 24 is a cavity 26 generally adjacent the midpoint of bore 25 of housing 24. Intermediate impact link 12 is preferably cylindrical and has a shoulder 28 extending generally about the midpoint thereof. The shoulder 28 is adapted to be received in the cavity 26.

In order to form cavity 26 and to concurrently receive shoulder 28, housing 24 must be made in at least two portions, front portion 30 and rear portion 32. In the embodiment shown in Figure 1, a mid portion 34 is also utilized to facilitate installation of other centering devices 36 utilized to center intermediate impact link 12 in housing 24. Appropriate fastening means 37, in this instance elongated bolts, are utilized to interconnect the various portions of housing 24.

Damping means 35 for retarding movement of the reciprocating intermediate impact link 12 are located in cavity 26. These means include an annular ring 38 which, in this embodiment, is formed to slidably move on shoulder 28 of intermediate impact link 12 in said first and second directions. Formed in annular ring 38 are a plurality of orifices 40. Each orifice 40 is oriented in the axial direction thus permitting communication of a viscous fluid which also forms a portion of the means for retarding recoil and which is located in cavity 26.

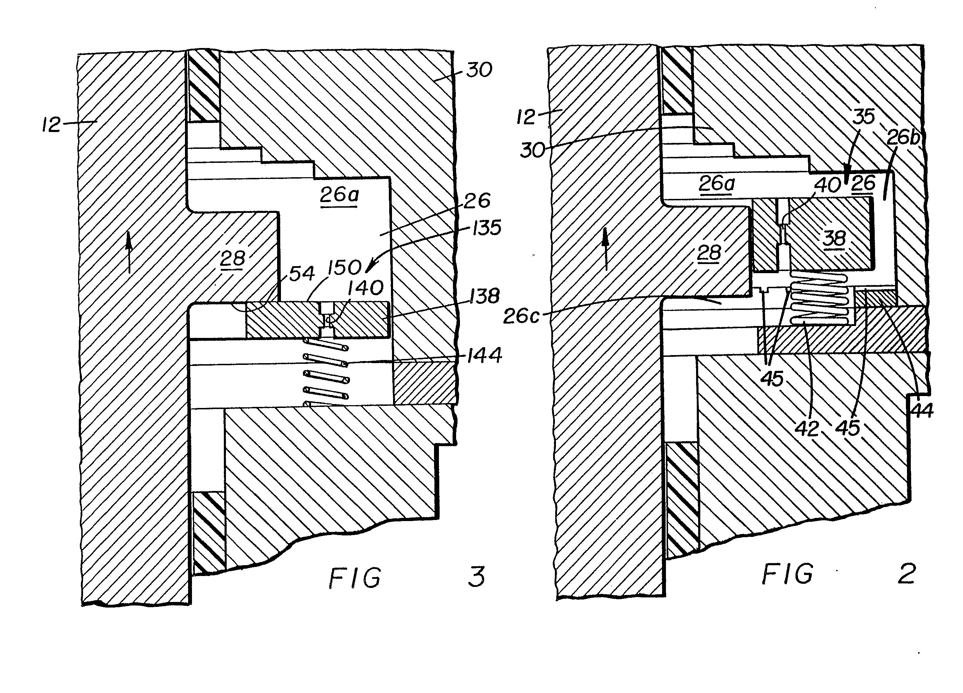

Annular ring 38 is biased toward front portion 30 of housing 24 by a plurality of resilient members such as helical springs 42. Located at the rearward end of cavity 26 is a stop 44. Referring to Figure 2, it can be seen that stop 44 may also be an annular ring which is located adjacent the outer portion of cavity 26. The inner diameter of stop 44 is less than the outer diameter of annular ring 38, so that upon movement of annular ring 38 downwardly as shown in Figure 2, ring 38 will contact stop 44 before coming into contact with housing 24. A plurality of grooves 45 are formed in the upper surface of stop 44 so that fluid trapped in cavity 26a and cavity 26b with annular ring 38 seated or in close proximity to stop 44 may pass thereby into cavity 26c.

It can be seen in Figure 1 that intermediate impact link 12 is journaled by appropriate bearings 46 in housing 24. Bearings 46 are preferably relatively fluid tight and thus also substantially impervious to deleterious material which could affect the operation of eccentric 18. It should be understood that eccentric 18, which is driven by a prime mover (not shown), is preferably sealed in a chamber 48 which may also be filled with lubricant or the like. At the other opposite end of intermediate impact link 12 is portion 20 which, as shown in Figure 1, need not be integral with intermediate impact link 12, but rather be received in a central bore 50 of intermediate impact link 12. This particular construction is appropriate to provide a replaceable portion of the intermediate impact link 12.

Industrial Applicability

Referring to Figure 1, a recoil damper 10 is shown in the environment of a rock breaker which consists of a shank 14, an intermediate impact link 12, and an eccentric 18. The intermediate impact link 12 is mounted in the housing 24 for movement in first and second opposite directions.

As shown in Figure 1, the rock breaker embodiment is in the "at rest" condition with intermediate impact link 12 just resting on the range circle 22 of eccentric 18. Bringing the rock breaker tip 16 into contact with a working surface (not shown) results in shank 14 moving downwardly as shown in Figure 1 into contact with portion 20. Further movement of rock breaker tip 16 downwardly results in intermediate impact link 12 moving downwardly against the centering forces of devices 36. As point 51 of eccentric 18 moves around circle 22, contact is made with surface 52 of intermediate impact link 12 by eccentric 18 at a point on the surface thereof between point 53 (on the base circle of eccentric 18) and point 51. As a result of this contact, intermediate impact link 12 is thrust upwardly in Figure 1 causing shank 14 to impart the force of eccentric 18 against the working surface or rock.

Referring to Figure 2, the link 12 is shown in its movement in a second direction during the force stroke toward the working surface. The viscous fluid contained in cavity 26 has been partially compressed in front of the leading edge of shoulder 28 thus forcing annular ring 38 downwardly against the biasing force of helical spring 42. This movement allows relatively free flow of fluid from the forward portion of cavity 26 denoted as 26a in Figure 2 around the shoulder 28 and annular ring 38 through the annular cavity 26b formed between the outer surface of annular ring 38 and cavity 26 and into the area 26c behind shoulder 28 and annular ring 38. As intermediate impact link 12 reaches its full forward or up position, the helical spring 42 urges annular ring 38 back toward the position in Figure 1. When recoil motion starts, fluid in portion 26c of cavity 26 is influenced by shoulder 28 moving downwardly. With annular ring 38 in the up position as shown in Figure 1, fluid is then forced to escape through orifice 40 into cavity 26a thus restricting or retarding movement of the intermediate impact link 12 in the downward direction.

The device 36 serves to center intermediate impact link 12 generally at a mid position as shown in Figure 1 so that without rock breaker tip 16 being in contact with a working surface, the intermediate impact link 12 will remain out of contact with eccentric 18. Finally, stop 44 limits movement of annular ring 38 downwardly during the force stroke. Should annular ring 38 contact stop 44 or come in close proximity thereto during the upward stroke of link 12, grooves 45 will allow the flow of fluid from cavity 26a to cavity 26c. By appropriate sizing of the cavities, annular ring 38 need never come in contact with stop 44 except in extreme conditions.

A Second Mode for Carrying Out the Invention

Referring now to Figure 3, a second mode for carrying out this invention in the same environment is shown. The like parts are denoted by the same numerals, while new parts are denoted by new numerals.

In this embodiment the damping means 135 includes an annular ring 138 that has an inside diameter slightly smaller than the outside diameter of shoulder 28 so that during the "at rest" position, annular ring 138 may rest against the rear surface 54 of shoulder 28. Resilient means such as a helical spring 144 serve to urge annular ring 138 into this position. Annular ring 138 has formed therein a plurality of axial orifices 140 in the manner of an annular ring 38 in the just described embodiment.

Industrial Applicability of the
Second Mode

Operation of the second embodiment is quite similar to the first embodiment and will be described in the same context of the rock breaker.

Movement of intermediate link 12 in the upward direction as shown in Figure 3 results in a fluid contained in portion 26a of cavity 26 passing freely around shoulder 28 and the opening formed between forward surface 150 of annular ring 138 and lower surface 54 of shoulder 28. As recoil starts, annular ring 138 is urged upwardly by helical spring 144 to come into contact with surface 54 of shoulder 28 thus blocking communication of fluid through the opening between surfaces 54 and 150. Fluid is then forced through orifice 140 as intermediate impact link 12 moves. Such flow of fluid through orifice 140 retards the movement of intermediate impact link 12 in the downward direction.

**Claims**

1. A recoil damper (10) comprising
a housing (24),
a member (12) reciprocally mounted in said housing (24) for movement in first and second opposite directions,
a radial flange (28) on said member (12),
first (26a) and second (26c) cavities defined in said housing (24) on opposite sides of said flange (28) and containing a damping fluid therein, and
damping means (35/135) for restricting flow of said damping fluid from said second cavity (26c) to said first cavity (26a) in response to compression of damping fluid in said second cavity (26c) by said flange (28) when said member (12) is moved in said first direction,
said damping means (35/135) permitting relatively free flow of damping fluid from said first cavity (26a) to said second cavity (26c) in response to compression of damping fluid in said first cavity (26a) by said flange (28) when said reciprocating member (12) is moved in said second direction, characterized in that said damper is for use with a reciprocating tool (14), such as a rock breaker,
in that said reciprocating member (12) is an intermediate impact link of the tool,
and in that said housing (24) is so arranged as to permit the reciprocating member to transmit force from a motion generator (18) to a tool (14).

2. The recoil damper (10) of claim 1 wherein said damping means (35/135) comprises an annular ring (38/138) positioned between said first (26a) and second (26c) cavities.

3. The recoil damper (10) of claim 2 wherein said damping means (35/135) further comprises means (42/144) for biasing said annular ring (38/138) in said second direction.

4. The recoil damper (10) of claim 2 or 3 further comprising a plurality of orifices (40/140) formed axially through said ring (38/138).

5. The recoil damper (10) of any of claims 2—4 wherein said annular ring (38) is slidably mounted on the periphery of said flange (28).

6. The recoil damper (10) of any of claims 2—5 wherein said annular ring (138) has an inside diameter less than an outside diameter of said flange (28) and is positioned on an axial side of said flange (28).

7. The recoil damper (10) of any of claims 1—6 further including a shank (14) having a tip (16) thereon, and eccentric means (18) for intermittently reciprocating said impact link (12) and said shank (14).

8. A hydraulic piston damper (10), comprising:
a housing (24) having a piston bore (25) providing opposite end portions (30, 32);
a fluid cavity (26) in the housing (24) communicating with said piston bore (25) intermediate said end portions (30, 32) thereof;
a reciprocal piston (12) axially slidably disposed in said piston bore (25) and a damper control member (35),
said reciprocal piston (12) having a radially outwardly extended flange (28) projecting into said cavity (26) in fluid pumping relation to a fixed volume of trapped fluid within the cavity (26);
said damper control member (35) being disposed for axial sliding movement within said cavity (26) relative to said flange (28) and providing a restricted orifice (40, 140); characterized by spring means (42) being provided for biasing said control member (35) toward a position blocking the flow of fluid past said flange (28) to force fluid through said orifice (40, 140) in dampening relation to movement of said piston (12) in one axial direction of travel, and said control member (35) being responsive to fluid pressure within said cavity (26) for movement to a position providing substantially unrestricted flow of fluid past said flange (28) during travel of said piston (12) in an opposite axial direction.

9. The piston damper (10) of claim 8 in which said control member (35) effectively divides said cavity (26) into opposed discrete compartments located substantially entirely radially outwardly of said flange (28) of the piston (12) which are alternately opened and closed with respect to each other during reciprocation of said piston (12).

10. The piston damper (10) of claim 8 or 9 in which said piston (12) is cylindrical and provides opposite power and recoil strokes; said control member (35) is an annular ring (38) disposed in circumscribing relation to said piston (12); and

said spring means (42) includes a plurality of compression springs disposed within one compartment of said cavity (26) and providing only a minimum of resistance to said fluid pressure in the opposite compartment during said power stroke of the piston (12) and effective to position said ring (38) in its blocking position prior to initiation of said piston (12) to its recoil dampening stroke.

11. The piston damper (10) of any of claims 8—10 in which said flange (28) on the piston (12) and said control ring (38) are radially overlapping for sealing engagement with each other when the ring (38) is in said blocking position.

12. The piston damper (10) of claim 10 or 11 in which said control ring (38) is disposed in circumscribing relation to said flange (28) on the piston (12); and

said cavity being defined by a wall having a portion adapted to be engaged in sealing relation by said ring (38) in its blocking position.

**Patentansprüche**

1. Rückstoßdämpfer (10), der folgendes aufweist:

ein Gehäuse (24),

ein in dem Gehäuse (24) hin und her bewegbar angeordnetes Glied (12) zur Bewegung in ersten und zweiten entgegengesetzten Richtungen,

einen Radialflansch (28) an dem Glied (12),

erste (26a) und zweite (26c) Hohlräume definiert im Gehäuse (24) auf entgegengesetzten Seiten des Flansches (28) und ein Dämpfungsströmungsmittel darinnen enthaltend, und

Dämpfungsmittel (35/135) zur Einschränkung der Strömung des Dämpfungsströmungsmittel von dem zweiten Hohlraum (26c) zum ersten Hohlraum (26a), und zwar infolge der Zusammendrückung des Dämpfungsströmungsmittels in den zweiten Hohlraum (26c) durch den Flansch (28), wenn das Glied (12) in der ersten Richtung bewegt wird, wobei die Dämpfungsmittel (35/135) die relativ freie Strömung des Dämpfungsströmungsmittels von dem ersten Hohlraum (26a) zum zweiten Hohlraum (26c) gestatten, und zwar infolge der Zusammendrückung des Dämpfungsströmungsmittels in dem ersten Hohlraum (26a) durch den Flansch (28), wenn das hin- und hergehende Glied (12) in der erwähnten zweiten Richtung bewegt wird, dadurch gekennzeichnet, daß der Dämpfer zusammen mit einem hin- und hergehenden Werkzeug (14), wie beispielsweise einem Felsbrecher, verwendet wird, daß das hin- und hergehende Glied (12) ein Zwischenschlagglied des Werkzeugs ist, und daß das Gehäuse (24) derart angeordnet ist, daß es dem hin- und hergehenden Glied gestattet, die Kraft von einem Bewegungsgenerator (18) zu einem Werkzeug (14) zu übertragen.

2. Rückstoßdämpfer (10) nach Anspruch 1, wobei die Dämpfungsmittel (35/135) einen ringförmigen Ring (38/138) aufweisen, der zwischen den ersten (26a) und zweiten (26c) Hohlräumen angeordnet ist.

3. Rückstoßdämpfer (10) nach Anspruch 2, wobei die Dämpfungsmittel (35/135) ferner Mittel (42/144) aufweisen, um den ringförmigen Ring (38/138) in der zweiten Richtung vorzuspannen.

4. Rückstoßdämpfer (10) nach Anspruch 2 oder 3, wobei ferner eine Vielzahl von Zumeßöffnungen (40/140) vorgesehen ist, und wobei diese Öffnungen axial durch den Ring (38/138) verlaufend ausgebildet sind.

5. Rückstoßdämpfer (10) nach einem der Anspruch 2—4, wobei der ringförmige Ring (38) gleitend am Umfang des Flansches (28) angeordnet ist.

6. Rückstoßdämpfer (10) nach einem der Ansprüche 2—5, wobei der ringförmige Ring (138) einen Innendurchmesser kleiner als einen Außendurchmesser des Flansches (28) aufweist, und wobei der Ring auf einer Axialseite des Flansches (28) angeordnet ist.

7. Rückstoßdämpfer (10) nach einem der Ansprüche 1—6, wobei ferner ein Schaft (14) vorgesehen ist, der eine Spitze (16) aufweist, und wobei ferner exzentrische Mittel (18) vorhanden sind, um in intermittierender Weise das Schlagglied (12) und den Schaft (14) hin- und herzubewegen.

8. Hydraulischer Kolbendämpfer (10), der folgendes aufweist:

ein Gehäuse (24) mit einer Kolbenbohrung (25) zum Vorsehen entgegengesetzter Endteile (30, 32),

einen Strömungsmittelhohlraum (26) im Gehäuse (24), und zwar in Verbindung stehend mit der Kolbenbohrung (25) zwischen den Endteilen (30, 32),

einen hin- und hergehenden Kolben (12) axial gleitend angeordnet in der Kolbenbohrung (25) und Dämpfungssteuerglied (35),

wobei der hin- und hergehenden Kolben (12) einen radial nach außen erstreckten Flansch (28) aufweist, der in den Hohlraum (26) ragt, und zwar in Strömungsmittelpumpbeziehung mit einem festen Volumen eingefangenen Strömungsmittels innerhalb des Hohlraums (26),

wobei das Dampfungssteuerglied (35) zur axial gleitenden Bewegung innerhalb des Hohlraums (26) angeordnet ist, und zwar relativ zum Flansch (28), und eine eingeschränkte Zumeßöffnung (40, 140) vorsieht, gekennzeichnet durch

Federmittel (42) zum Vorspannen des Steuergliedes (35) auf eine Stellung hin, die den Fluß des Strömungsmittels an dem Flansch (28) vorbei blockiert, um das Strömungsmittel durch die Zumeßöffnung (40, 140) zu zwingen, und zwar in Dämpfungsbeziehung zur Bewegung des Kolbens (12) in einer Axialrichtung des Laufs, und wobei das Steuerglied (35) auf den Strömungsmitteldruck innerhalb des Hohlraums (26) anspricht, und zwar für eine Bewegung in eine Position, die eine im wesentlichen uneingeschränkte Strömung des Strömungsmittels an dem Flansch (28) vorbei vorsieht, und zwar während des Laufs des Kolbens (12) in einer entgegengesetzten axialen Richtung.

9. Kolbendämpfer (10) nach Anspruch 8, wobei das Steuerglied (35) in effektiver Weise den Hohlraum (26) aufteilt in entgegengesetztliegende diskrete Abteile, angeordnet im wesentlichen vollständig radial nach außen zum Flansch (28) des Kolbens (12), und zwar werden diese abwechselnd geöffnet und geschlossen bezüglich einander während der Hin- und Herbewegung des Kolbens (12).

10. Kolbendämpfer (10) nach Anspruch 8 oder 9, wobei der Kolben (12) zylindrisch ausgebildet ist und entgegengesetzte Leistungs- und Rückstoß-Hübe vorsieht, und wobei ferner das Steuerglied (35) ein ringförmiger Ring (38) ist, und zwar angeordnet in Umfangsbeziehung zum Kolben (12), wobei ferner die Federmittel (42) eine Vielzahl von Druckfedern aufweisen, die innerhalb eines Abteils des Hohlraums (26) angeordnet sind und nur ein Minimum an Widerstand gegenüber dem Strömungsmitteldruck im entgegengesetzten Abteil während des Leistungshubs des Kolbens (12) vorsehen und effektiv sind, um den Ring (38) in seiner Blockierposition zu positionieren, und zwar vor der Initiierung des Kolbens (12) für seinen Rückstoßdämpfungshub.

11. Kolbendämpfer (10) nach einem der Ansprüche 8—10, wobei der Flansch (28) am Kolben (12) und der Steuerring (38) radial überlappend für den Dichtungseingriff miteinander ausgebildet sind, wenn sich der Ring (38) in seiner Blokkierposition befindet.

12. Kolbendämpfer (10) nach Anspruch 10 oder 11, wobei der Steuerring (38) in umfassender Beziehung zum Flansch (28) am Kolben (12) angeordnet ist, und wobei der Kolben durch eine Wand definiert ist, die einen Teil aufweist, die für den Eingriff in Dichtungsbeziehung durch den Ring (38) in seiner Blockierposition dient.

## Revendications

1. Amortisseur de rebond (10) comprenant
un carter (24),
un organe (12) monté à mouvement alternatif dans ledit carter (24) pour se déplacer dans une première et une seconde directions opposées,
une bride radiale (28) sur ledit organe (12),
une première (26a) et une seconde (26c) cavités définies dans ledit carter (24) sur les faces opposées de ladite bride (28) et contenant un fluide d'amortissement, et
un moyen d'amortissement (35/135) pour entraver l'écoulement dudit fluide d'amortissement depuis ladite seconde cavité (26c) jusqu'à ladite première cavité (26a) en réponse à une compression du fluide d'amortissement dans ladite seconde cavité (26c) par ladite bride (28) lorsque ledit organe (12) est déplacé dans ladite première direction, ledit moyen d'amortissement (35/135) permettant un écoulement relativement libre du fluide d'amortissement depuis ladite première cavité (26a) jusqu'à ladite seconde cavité (26c) en réponse à une compression du fluide d'amortissement dans ladite première cavité (26a) par ladite bride (28) lorsque ledit organe à mouvement alternatif (12) est déplacé dans ladite seconde direction, caractérisé en ce que ledit amortisseur est destiné à être utilisé avec un outil alternatif (14) tel qu'un brise-roche,

en ce que ledit organe à mouvement alternatif (12) est une masselotte de percussion intermédiaire de l'outil,

et en ce que ledit carter (24) est disposé de manière à permettre à l'organe à mouvement alternatif de transmettre une force provenant d'un générateur de déplacement (18) à un outil (14).

2. Amortisseur de rebond (10) selon la revendication 1, dans lequel ledit moyen d'amortissement (35/135) comprend une bague annulaire (38/138) disposée entre lesdites première (26a) et seconde (26c) cavités.

3. Amortisseur de rebond (10) selon la revendication 2, dans lequel ledit moyen d'amortissement (35/135) comprend en outre un moyen (42/144) pour solliciter ladite bague annulaire (38/138) dans ladite seconde direction.

4. Amortisseur de rebond (10) selon la revendication 2 ou 3, comprenant en outre plusieurs orifices (40/140) ménagés axialement à travers ladite bague (38/138).

5. Amortisseur de rebond (10) selon l'une quelconque des revendications 2 à 4, dans lequel ladite bague annulaire (38) est monté à coulissement sur la périphérie de ladite bride (28).

6. Amortisseur de rebond (10) selon l'une quelconque des revendications 2 à 5, dans lequel ladite bague annulaire (138) présente un diamètre intérieur inférieur à un diamètre extérieur de ladite bride (28) et est positionnée sur une face axiale de ladite bride (28).

7. Amortisseur de rebond (10) selon l'une quelconque des revendications 1 à 6, comprenant en outre une tige (14) ayant une pointe (16), et un moyen excentrique (18) pour déplacer alternativement et de façon intermittente ladite masselotte de percussion (12) et ladite tige (14).

8. Amortisseur à piston hydraulique (10) comprenant:
un carter (24) comportant un alésage de piston (25) fournissant des parties terminales opposées (30, 32);
une cavité (26) pour un fluide, ménagée dans le carter (24) et communiquant avec ledit alésage de piston (25) en un point intermédiaire entre lesdites parties terminales (30, 32) de ce dernier;
un piston à mouvement alternatif (12) disposé à glissement axial dans ledit alésage de piston (25) et un organe de commande d'amortisseur (35), ledit piston à mouvement alternatif (12) comportant une bride s'étendant radialement vers l'extérieur (28) faisant saillie à l'intérieur de ladite cavité (26) en relation de pompage d'un fluide avec un volume fixe d'un fluide piègé dans la cavité (26);

ledit organe de commande d'amortisseur (35) étant disposé de manière à se déplacer axialement par coulissement à l'intérieur de ladite cavité (26) relativement à ladite bride (28) et fournissant un orifice restreint (40, 140), caractérisé par

— un moyen à ressort (42) prévu pour solliciter ledit organe de commande (35) en direction d'une position bloquant l'écoulement du fluide au-delà de ladite bride (28) pour forcer le fluide à travers ledit orifice (40, 140) en relation d'amortissement avec le déplacement dudit piston (12) dans une première direction axiale de déplacement, et ledit organe de commande (35) étant sensible à la pression du fluide règnant à l'intérieur de ladite cavité (26) pour se déplacer vers une position fournissant un écoulement sensiblement non limité du fluide au delà de ladite bride (28) lors du déplacement dudit piston (12) dans une direction axiale de sens opposée.

9. Amortisseur à piston (10) selon la revendication 8, dans lequel ledit organe de commande (35) divise effectivement ladite cavité (26) en des compartiments distincts opposés situés sensiblement complètement dans le sens radial vers l'extérieur de ladite bride (28) du piston (12), qui sont alternativement ouverts et fermés l'un par rapport à l'autre lors du déplacement alternatif dudit piston (12).

10. Amortisseur à piston (10) selon la revendication 8 ou 9 dans lequel ledit piston (12) est cylindrique et fournit des déplacements de puissance et de rebond opposés; ledit organe de commande (35) est une bague annulaire (38) disposée concentriquement audit piston (12); et

ledit moyen à ressort (42) comprend plusieurs ressorts de compression disposés à l'intérieur d'un compartiment de ladite cavité (26) et n'opposant qu'un minimum de résistance à ladite pression de fluide dans le compartiment opposé lors dudit déplacement de puissance du piston (12) et apte à positionner ladite bague (38) dans sa position de bloquage avant le début du déplacement d'amortissement de rebond dudit piston (12).

11. Amortisseur à piston (10) selon l'une quelconque des revendications 8 à 10, dans lequel ladite bride (28) située sur le piston (12) et ladite bague de commande (38) se chevauchent radialement pour venir en prise l'une avec l'autre de façon étanche lorsque la bague (38) est dans ladite position de blocage.

12. Amortisseur à piston (10) selon la revendication 10 ou 11, dans lequel ladite bague de commande (38) est disposée concentriquement à ladite bride (28) du piston (12); et

ladite cavité étant définie par une paroi ayant une partie conue pour venir en contact étanche avec ladite bague (38) dans sa position de blocage.

FIG 1

FIG 3

FIG 2

0 040 773